# EUROPEAN PATENT APPLICATION

(11) **EP 2 230 820 A1**
(43) Date of publication of application: **22.09.2010**
(21) Application number: 10156166.0
(22) Date of filing: 11.03.2010
(51) Int. Cl.: H04L 29/08, H04L 12/28

(54) **Service discovery funtionality utilizing personal area network protocols**

(30) Priority: 16.03.2009 US 405130
(71) Applicant: APPLE INC., Cupertino, CA 95014 (US)
(72) Inventor: Tucker, Brian, Cupertino, CA 95014 (US); Graessley, Joshua, Cupertino, CA 95014 (US); Mcguire, Rory, Cupertino, CA 95014 (US); Cheshire, Stuart, Cupertino, CA 95014 (US); Van Milligan, Michael, Cupertino, CA 95014 (US); Conn, Jason, Cupertino, CA 95014 (US); Melo, Nicolas, Cupertino, CA 95014 (US); Prats, Augustin, Cupertino, CA 95014 (US)
(74) Representative: Barnfather, Karl Jon

(57) **Abstract**

Techniques to provide service discovery via personal area network protocols. A personal area network is generally a network that covers only a few feet or meters of physical space. Personal area networks can be wired or wireless. Wired personal area networks include, for example, Universal serial Bus (USB) and IEEE 1394 (or Fire Wire) connections. Wireless personal area networks can include, for example, IrDA, Bluetooth, UWB, Z-Wave and ZigBee. Service discovery results in indication of services that are available via the personal area network and not necessarily the physical devices that provide the services. A wireless device may utilize DNS formatted data over a Bluetooth connection to determine services that are available from other Bluetooth devices within range.

## Description

### TECHNICAL FIELD

Embodiments of the invention relate to service discovery. More particularly, embodiments of the invention relate to techniques to provide service discovery utilizing a personal area network protocol.

### BACKGROUND

Various discovery techniques are available for electronic devices connected to, or attempting to connect to a network. These discovery techniques typically involve use of the network protocol to determine what devices and/or services are available through a network connection. These discovery techniques are useful for many situations. However, in certain situations, these discovery techniques are not optimal.

### BRIEF DESCRIPTION OF THE DRAWINGS

The invention is illustrated by way of example, and not by way of limitation, in the figures of the accompanying drawings in which like reference numerals refer to similar elements.
Figure 1 is a high-level diagram of one embodiment of a local device connected with remote devices via a personal area network.
Figure 2 is a flow diagram of one embodiment of a technique for local device service discovery over a personal area network.
Figure 3 is a flow diagram of one embodiment of a technique for remote device service discovery over a personal area network.
Figure 4 is a block diagram of one embodiment of a local discovery agent that may be resident on a local electronic device that that discovers and accesses services over a personal area network.
Figure 5 is a block diagram of one embodiment of a remote discovery agent that may be resident on a remote electronic device that that broadcasts and provides services over a personal area network.
Figure 6 is a block diagram of one embodiment of an electronic system.

### DETAILED DESCRIPTION

In the following description, numerous specific details are set forth. However, embodiments of the invention may be practiced without these specific details. In other instances, well-known circuits, structures and techniques have not been shown in detail in order not to obscure the understanding of this description.

Described herein are techniques to provide service discovery via personal area network protocols. A personal area network is generally a network that covers only a few feet or meters of physical space. Personal area networks can be wired or wireless. Wired personal area networks include, for example, Universal Serial Bus (USB) and IEEE 1394 (or FireWire) connections. Wireless personal area networks can include, for example, IrDA, Bluetooth, UWB, Z-Wave and ZigBee. Service discovery results in indication of services that are available via the personal area network and not necessarily the physical devices that provide the services. For example, a wireless device may utilize DNS formatted data over a Bluetooth connection to determine services that are available from other Bluetooth devices within range. Other combinations of formats and protocols may also provide service discovery in a similar manner.

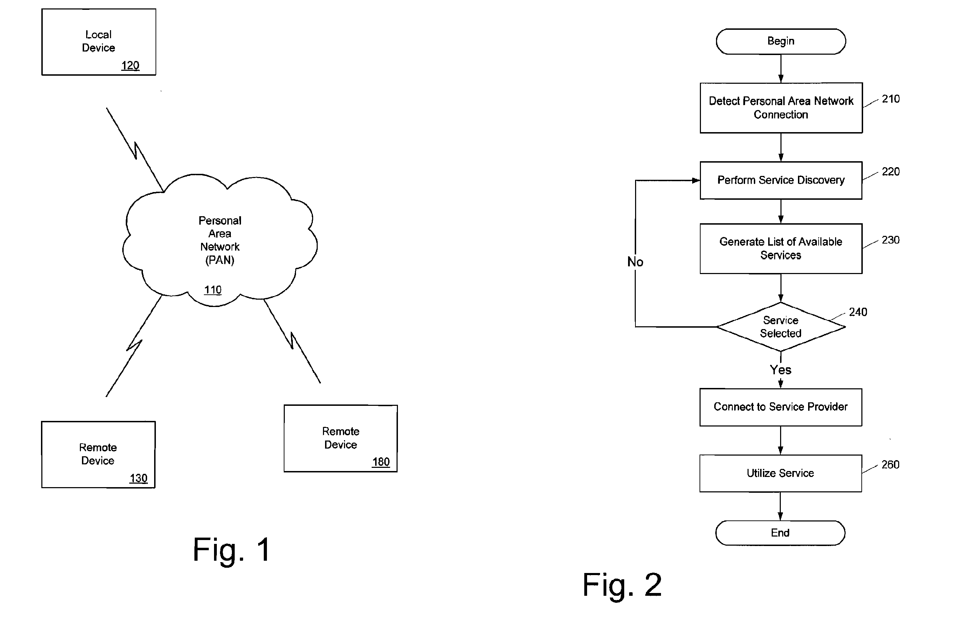

Figure 1 is a high-level diagram of one embodiment of a local device connected with remote devices via a personal area network. Personal area network 110 provides interconnection between the local device 120 and any number of remote devices (e.g., remote device 130 and remote device 180). Personal area network 110 can support utilize one or more of the protocols set forth above to provide communication between multiple electronic devices. In one embodiment, personal area network 110 is a BLUETOOTH compliant network. Bluetooth protocols are described in "Specification of the Bluetooth System: Core, Version 1.1," published February 22,2001 by the Bluetooth Special Interest Group, Inc. Associated as well as previous or subsequent versions of the Bluetooth standard may also be supported.

Local device 120 is an electronic device capable of at least communicating using the protocol of personal area network 110. Local device 120 is local from the perspective of a user who is attempting to access services using local device 120. The physical location and/or configuration of local device 120 is not limited by the techniques and architectures described herein. Local device 120 may be, for example, a laptop computer, a cellular telephone, a smartphone, a personal digital assistant, a printer, a copier, a fax machine, etc. Local device 120 may also be capable of communicating using protocols other than that of personal area network 110.

Remote devices 130 and 180 are an electronic device capable of at least communicating using the protocol of personal area network 110. Any number of remote devices may be coupled via personal area network 110. Remote devices 130 and 180 are remote from the perspective of a user who is attempting to access services using local device 120. The physical location and/or configuration of remote devices 130 and 180 is not limited by the techniques and architectures described herein. Remote devices 130 and 180 may be, for example, laptop computers, cellular telephones, smartphones, personal digital assistants, printers, copiers, fax machines, or any combination thereof. Remote devices 130 and 180 may also be capable of communicating using protocols other than that of personal area network 110.

Figure 2 is a flow diagram of one embodiment of a technique for local device service discovery over a personal area network. In the examples the follow, specifics are provided in terms of specific protocols, standards and/or formats. These are provided for illustration purposes only as the techniques described herein are applicable to other protocols, standards and/or formats.

The device(s) performing the operations of Figure 2 may be any type of electronic device configured to communicate over a personal area network. The local device may detect a personal area network, 210. The local device may have a transceiver configured to send and receive signals as specified by the personal area network protocol. The personal area network support, for example, Bluetooth-compliant communications. When the transceiver of the local device is enabled and detects signals that conform to the relevant protocol, the device can determine that a personal area network is available.

Service discovery is performed, 220. In one embodiment, service discovery is performed by the devices of the personal area network broadcasting services that they provide. One protocol by which service discovery may be performed is Bonjour available from Apple, Inc. Other service discovery protocols can be used as well.

By broadcasting services that are available and receiving broadcast messages from other devices, the devices of the personal area network can compile a list of services available via the personal area network, 230. Each device of the personal area network can generate its own list of services available from remote devices.

In one embodiment, the list can be dynamically updated based on subsequently-received broadcasts. For example, if a device is removed from the personal area network, the services provided by that device can be removed from the list. As another example, if a device is added to the personal area network, the services provided by the new device can be added to the list in response to a broadcast service availability message.

In one embodiment, service discovery information may be transmitted using DNS or mDNS format. That is, portions of the broadcast may be in DNS or mDNS format. As but one example, DNS-formatked fields having information related to services provided by a broadcasting device may be transmitted in Bonjour-formatted packets over a Bluetooth-compliant wireless connection. Other format-protocol combinations can also be used. Thus, service availability information may be available to a receiving device without the receiving device being connected to the device providing the service. This may provide a more efficient and/or more secure environment in which services may be shared between devices as compared to requiring connections for discovery.

The services provided may be a broad range of services including, but not limited to, print services, local area network (LAN) access services, wide area network (WAN) network services, cellular telephone services, data storage services, application services (e.g., media playback, games, recording). Discovery and access to other services may also be supported and/or provided in the same manner.

The list of available services may be presented to a user of the local device. Alternatively, the local device may have been configured for a default action to respond to certain service availability conditions. In one embodiment, a list of available services may be presented to a user of the local device through an interface such as a display. The user may be able to select one of the available services. In one embodiment, the list of available services may be updated if no services are selected, 240.

In response to selection of an available service, 240, the local device may connect to the remote device providing the selected service via the personal area network, 250. In the example of a Bluetooth-compliant personal area network, the local device may connect with the remote device if a pairing operation has already been performed. If the local device has not been paired with the remote device, a pairing operation may be initiated in response to selection of the service. The service can then be utilized over the personal area network, 250.

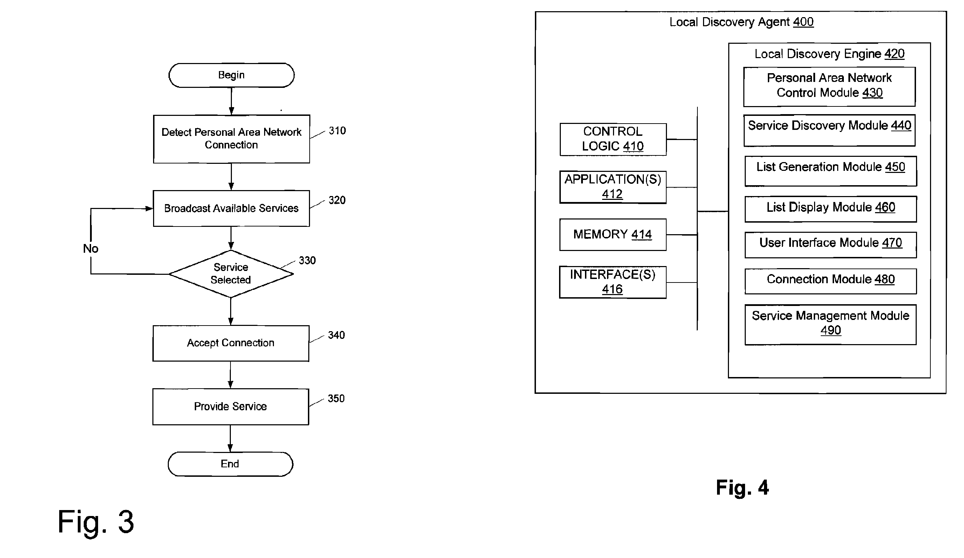

Figure 3 is a flow diagram of one embodiment of a technique for remote device service discovery over a personal area network. In the examples the follow, specifics are provided in terms of specific protocols, standards and/or formats. These are provided for illustration purposes only as the techniques described herein are applicable to other protocols, standards and/or formats.

The device(s) performing the operations of Figure 2 may be any type of electronic device configured to communicate over a personal area network. The remote device may detect a personal area network, 310. The remote device may have a transceiver configured to send and receive signals as specified by the personal area network protocol. The personal area network support, for example, Bluetooth-compliant communications. When the transceiver of the local device is enabled and detects signals that conform to the relevant protocol, the device can determine that a personal area network is available.

Available services are broadcast, 320. In one embodiment, service discovery is performed by the devices of the personal area network broadcasting services that they provide. One protocol by which service discovery may be performed is Bonjour available from Apple, Inc. Other service discovery protocols can be used as well.

In one embodiment, service discovery information may be transmitted using DNS or mDNS format. That is, portions of the broadcast may be in DNS or mDNS format. As but one example, DNS-formatked fields having information related to services provided by a broadcasting device may be transmitted in Bonjour-formatted packets over a Bluetooth-compliant wireless connection. Other format-protocol combinations can also be used.

In response to selection of an available service, 330, the local device selecting the service may attempt to connect to the remote device providing the selected service via the personal area network. The remote device may accept the connection, 340. The service can then be provided over the personal area network, 350.

Figure 4 is a block diagram of one embodiment of a local discovery agent that may be resident on a local electronic device that that discovers and accesses services over a personal area network. Local discovery agent 400 includes control logic 410, which implements logical functional control to direct operation of local discovery agent 400, and/or hardware associated with directing operation of local discovery agent 400. Logic may be hardware logic circuits and/or software routines. In one embodiment, local discovery agent 400 includes one or more applications 412, which represent code sequence and/or programs that provide instructions to control logic 410.

Local discovery agent 400 includes memory 414, which represents a memory device and/or access to a memory resource for storing data and/or instructions. Memory 414 may include memory local to local discovery agent 400, as well as, or alternatively, including memory of the host system on which local discovery agent 400 resides. Local discovery agent 400 also includes one or more interfaces 416, which represent access interfaces to/from (e.g., an input/output interface, application programming interface) local discovery agent 400 with regard to entities (electronic or human) external to local discovery agent 400.

Local discovery agent 400 also includes local discovery engine 420, which represents one or more functions that enable local discovery agent 400 to discover services available over a personal area network from remote device without establishing a connection with the remote devices. Example modules that may be included in local discovery engine 420 are personal area network control module 430, service discovery module 440, list generation module 450, list display module 460, user interface module 470, connection module 480 and service management module 490. Each of these modules may further include other modules to provide other functions. As used herein, a module refers to routine, a subsystem, etc., whether implemented in hardware, software, firmware or some combination thereof.

Network control module 430 provides personal area network connection and management functionality. For example, when utilizing a Bluetooth-compliant network, network control module 430 may function to control a transceiver to communicate with one or more remote devices utilizing Bluetooth standard frequencies, timing, packet formats, etc. When communicating utilizing other personal area network protocols (e.g., USB, FireWire, IrDA, UWB, Z-Wave, ZigBee), network control module functions to communicate according to those protocols.

Service discovery module 440 provides service discovery functionality for local discovery agent 400. In one embodiment, service discovery module 440 analyzes communication signals received from a personal area network via network control module 430 to find packets that broadcast services available from remote devices. Service discovery module 440 extracts information related to available services from network communications. In one embodiment, the service availability information is presented as DNS-formatted data fields; however, other formats can also be used. In one embodiment, service availability information is transmitted in Bonjour-compliant packets over the personal area network; however, other packet formats can also be used.

List generation module 450 receives service availability information from service discovery module 440 and creates a list indicating services that are available via the personal area network. List generation module 450 may compile the information in a format suitable for use by the local device

List display module 460 utilizes the list information from list generation module 450 to generate a graphical representation of the services available from the personal area network. The graphical representation of the services may take many forms, for example, a drop down list or a list with buttons. In one embodiment, the service availability information includes only the services that are available and not the devices that provide the services or any status information related to the services.

User interface module 470 causes the list generated by list display module to 460 to be displayed on a display coupled with the local device. User interface module 470 also provides input and output functionality to allow a user of the local device to select one or more of the services from the list. User interface module 470 may also provide feedback to the user in response to selection of a service from the list.

Connection module 480 causes a connection between the local device and the remote device providing the selected service to be initiated in response to selection of a service. For example, if a user of the local device selects a multi-player game available on a remote device, connection module 480 causes a connection to be established between the local device and the remote device having the selected game. Similarly, if the user selected printing services from the list of available services, connection module 480 causes a connection to be established between the local device and the remote device providing the printing services.

Service management module 490 manages services after the connection is established. For example, service management module 490 may provide print commands and data to a remote device that provides printing services. In one embodiment, service management module 490 formats data to be transmitted according to the personal area network protocol so that data may be transmitted over the personal area network. Service management module 490 may also provide additional functionality such as commands and interfaces between an application utilizing the service and the device providing the service.

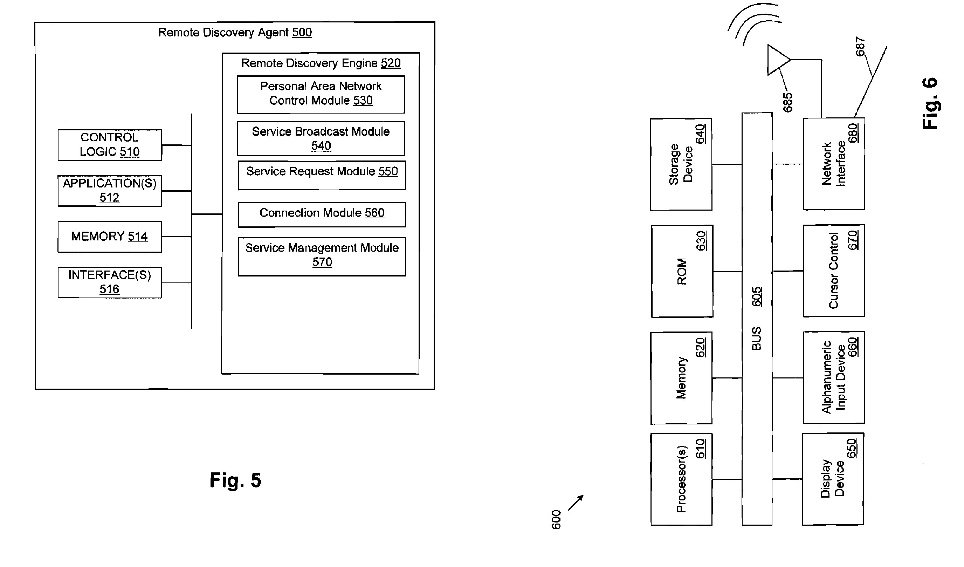

Figure 5 is a block diagram of one embodiment of a remote discovery agent that may be resident on a remote electronic device that that broadcasts and provides services over a personal area network. Remote discovery agent 500 includes control logic 510, which implements logical functional control to direct operation of remote discovery agent 500, and/or hardware associated with directing operation of remote discovery agent 500. Logic may be hardware logic circuits and/or software routines. In one embodiment, remote discovery agent 500 includes one or more applications 512, which represent code sequence and/or programs that provide instructions to control logic 510.

Remote discovery agent 500 includes memory 514, which represents a memory device and/or access to a memory resource for storing data and/or instructions. Memory 514 may include memory local to remote discovery agent 500, as well as, or alternatively, including memory of the host system on which remote discovery agent 500 resides. Remote discovery agent 500 also includes one or more interfaces 516, which represent access interfaces to/from (e.g., an input/output interface, application programming interface) remote discovery agent 500 with regard to entities (electronic or human) external to local discovery agent 500.

Remote discovery agent 500 also includes remote discovery engine 520, which represents one or more functions that enable remote discovery agent 500 to advertise services available over a personal area network from remote device without establishing a connection with the devices that may subsequently request the services. Example modules that may be included in remote discovery engine 520 are personal area network control module 530, service broadcast module 540, service request management module 550, connection module 560 and service management module 570. Each of these modules may further include other modules to provide other functions. As used herein, a module refers to routine, a subsystem, etc., whether implemented in hardware, software, firmware or some combination thereof.

Network control module 530 provides personal area network connection and management functionality. For example, when utilizing a Bluetooth-compliant network, network control module 530 may function to control a transceiver to communicate with one or more remote devices utilizing Bluetooth standard frequencies, timing, packet formats, etc. When communicating utilizing other personal area network protocols (e.g., USB, FireWire, IrDA, U WB, Z-Wave, ZigBee), network control module functions to communicate according to those protocols.

Service broadcast module 540 determines services available from the host device and generates a packet to broadcast information indicating the available services to devices on the personal area network that are not connected to the host device. In one embodiment, service broadcast module 540 formats service availability information as DNS-formatted data or mDNS-formatted data. Other formats can also be used. This data is transmitted in a field of a personal area network packet. In one embodiment, the service availability information is transmitted in Bonjour-formatted packets carried over the persona] area network. The receiving device(s) can then interpret the packets to determine what services are available over the personal area network.

Service request management module 550 manages service requests received over the personal area network. In one embodiment, when service/connection requests are received from a device to access services on the host device, service request management module 550 determines whether to accept the request, acknowledgement of the request, etc. Service request management module 550 may also manage the flow of information related to the requested service during the time the service is being provided.

Connection module 560 receives the connection from service management module 550 and manages the connection while the connection is active. Service management module 570 manages services after the connection is established.

In the foregoing description, local discovery functions and remote discovery functions have been treated as separate functions. However, in some embodiments, an electronic device may function as both a local discovery device and a remote discovery device. That is, an electronic device may provide services over the personal area network as well as discover and access services from other devices over the personal area network (or even a different personal area network). When an electronic device takes bother roles, modules described in Figures 4 and 5 may be shared and/or merged (e.g., control logic, memory).

Figure 6 is a block diagram of one embodiment of an electronic system. The electronic system illustrated in Figure 6 is intended to represent a range of electronic systems (either wired or wireless) including, for example, desktop computer systems, laptop computer systems, cellular telephones, personal digital assistants (PDAs) including cellular-enabled PDAs, set top boxes. Alternative electronic systems may include more, fewer and/or different components.

Electronic system 600 may function as a local device and/or a remote device as described above. That is, electronic system 600 may provide the functionality as described above with respect to Figures 2 and 3. Further, the local discovery agent and/or the remote discovery agent may be included in electronic system 600 as hardware, software, firmware or any combination thereof.

Electronic system 600 includes bus 605 or other communication device to communicate information, and processor 610 coupled to bus 605 that may process information. While electronic system 600 is illustrated with a single processor, electronic system 600 may include multiple processors and/or co-processors. Electronic system 600 further may include random access memory (RAM) or other dynamic storage device 620 (referred to as main memory), coupled to bus 605 and may store information and instructions that may be executed by processor 610, Main memory 620 may also be used to store temporary variables or other intermediate information during execution of instructions by processor 610.

Electronic system 600 may also include read only memory (ROM) and/or other static storage device 630 coupled to bus 605 that may store static information and instructions for processor 610. Data storage device 640 may be coupled to bus 605 to store information and instructions. Data storage device 640 such as a magnetic disk or optical disc and corresponding drive may be coupled to electronic system 600.

Electronic system 600 may also be coupled via bus 605 to display device 650, such as a cathode ray tube (CRT) or liquid crystal display (LCD), to display information to a user. Alphanumeric input device 660, including alphanumeric and other keys, may be coupled to bus 605 to communicate information and command selections to processor 610. Another type of user input device is cursor control 670, such as a mouse, a trackball, or cursor direction keys to communicate direction information and command selections to processor 610 and to control cursor movement on display 650.

Electronic system 600 further may include network interface^) 680 to provide access to a network, such as a local area network. Network interface(s) 680 may include, for example, a wireless network interface having antenna 685, which may represent one or more antenna(e). Network interface(s) 680 may also include, for example, a wired network interface to communicate with remote devices via network cable 687, which may be, for example, an Ethernet cable, a coaxial cable, a fiber optic cable, a serial cable, or a parallel cable.

In one embodiment, network interface(s) 680 may provide access to a local area network, for example, by conforming to IEEE 802.1 lb and/or IEEE 802.1 lg standards, and/or the wireless network interface may provide access to a personal area network, for example, by conforming to Bluetooth standards. Other wireless network interfaces and/or protocols can also be supported.

IEEE 802.11 b corresponds to IEEE Std. 802.11 b-1999 entitled "Local and Metropolitan Area Networks, Part 11: Wireless LAN Medium Access Control (MAC) and Physical Layer (PHY) Specifications: Higher-Speed Physical Layer Extension in the 2.4 GHz Band," approved September 16,1999 as well as related documents. IEEE 802.1 lg corresponds to IEEE Std 802.1 lg-2003 entitled "Local and Metropolitan Area Networks, Part 11: Wireless LAN Medium Access Control (MAC) and Physical Layer (PHY) Specifications, Amendment 4: Further Higher Rate Extension in the 2.4 GHz Band," approved June 27, 2003 as well as related documents.

In addition to, or instead of, communication via wireless LAN standards, network interface(s) 680 may provide wireless communications using, for example, Time Division, Multiple Access (TDMA) protocols, Global System for Mobile Communications (GSM) protocols, Code Division, Multiple Access (CDMA) protocols, and/or any other type of wireless communications protocol.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

In the foregoing specification, the invention has been described with reference to specific embodiments thereof. It will, however, be evident that various modifications and changes can be made thereto without departing from the broader spirit and scope of the invention. The specification and drawings are, accordingly, to be regarded in an illustrative rather than a restrictive sense.

## Claims

1. A method comprising:
detecting a personal area network connection with an electronic device;
discovering services available from remote devices via the personal area network without establishing connections with the remote devices;
generating a list of discovered services available via the personal area network;
establishing a connection between the electronic device and a selected remote device in response to selection of a service provided by the selected remote device.

2. The method of claim 1 wherein the personal area network comprises a wireless personal area network and wherein discovery is performed via a discovery protocol that causes devices coupled with the personal area network to broadcast services available from the respective devices.

3. The method of claim 2 wherein the discovery is further performed via devices coupled to the personal area network receiving broadcast indications of services available from other devices coupled to the personal area network.

4. The method of claim 3 wherein the discovery protocol utilizes Domain Name Service (DNS) formatted data that comprises multicast DNS (mDNS) formatted data.

5. The method of any preceding claim wherein generating a list of discovered services available via the personal area network comprises displaying a human-readable listing of the discovered services on a display of the electronic device.

6. An apparatus comprising:
means for detecting a personal area network connection with an electronic device;
means for discovering services available from remote devices via the personal area network without establishing connections with the remote devices;
means for generating a list of discovered services available via the personal area network;
means for establishing a connection between the electronic device and a selected remote device in response to selection of a service provided by the selected remote device.

7. The apparatus of claim 6 wherein the wireless personal area network conforms to a Bluetooth-compliant protocol.

8. The apparatus of claim 6 or 7 wherein the means for generating a list of discovered services available via the personal area network comprises means for displaying a human-readable listing of the discovered services on a display of the electronic device.

9. A method comprising:
detecting a personal area network connection to an electronic device;
broadcasting, using a personal area network protocol, service available to remote devices over the personal area network from the electronic device, wherein broadcasting is performed without connection to the remote devices;
receiving a connection request from at least one remote device indicating a service to be accessed;
connecting with the at least one remote device via the personal area network; and
providing the service to the at least one remote device via the personal area network.

10. The method of claim 9 wherein the personal area network comprises a wireless personal area network.

11. The method of claim 9 or 10 wherein the broadcast of available services comprises transmitting packets having fields describing the available service utilizing Domain Name Service (DNS) formatted data that comprises multicast DNS (mDNS) formatted data.

12. An apparatus comprising:
means for detecting a personal area network connection to an electronic device;
means for broadcasting, using a personal area network protocol, service available to remote devices over the personal area network from the electronic device, wherein broadcasting is performed without connection to the remote devices;
means for receiving a connection request from at least one remote device indicating a service to be accessed;
means for connecting with the at least one remote device via the personal area network; and
means for providing the service to the at least one remote device via the personal area network.

13. The apparatus of claim 12 wherein the personal area network conforms to a Bluetooth-compliant protocol.

14. The apparatus of claim 12 or 13 wherein the means for broadcasting of available services comprises means for transmitting packets having fields describing the available service utilizing Domain Name Service (DNS) formatted data.

15. An article of manufacture comprising a computer-readable medium having stored thereon instructions that, when executed, cause one or more processors to perform a method as in any one of claims 1-5 or 9-11.
